(19) Europäisches Patentamt / European Patent Office / Office européen des brevets

(11) **EP 4 618 292 A1**

(12) **EUROPEAN PATENT APPLICATION**
published in accordance with Art. 153(4) EPC

(43) Date of publication:
17.09.2025 Bulletin 2025/38

(51) International Patent Classification (IPC):
*H01M 50/451* (2021.01)    *H01M 50/491* (2021.01)
*H01M 50/403* (2021.01)

(21) Application number: 23923282.0

(22) Date of filing: 21.02.2023

(52) Cooperative Patent Classification (CPC):
H01M 10/0525; H01M 50/403; H01M 50/449;
H01M 50/451; H01M 50/491

(86) International application number:
PCT/CN2023/077479

(87) International publication number:
WO 2024/174098 (29.08.2024 Gazette 2024/35)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Contemporary Amperex Technology
(Hong Kong) Limited
Central (HK)

(72) Inventors:
• XU, Ming
  Ningde, Fujian 352100 (CN)
• YANG, Jianrui
  Ningde, Fujian 352100 (CN)
• WEI, Manxiang
  Ningde, Fujian 352100 (CN)

(74) Representative: Gong, Jinping
CocreateIP
Neumarkter Straße 21
81673 München (DE)

(54) **SEPARATOR AND PREPARATION METHOD THEREFOR, AND SECONDARY BATTERY AND ELECTRIC DEVICE RELATED THERETO**

(57) The present application provides a separator, a method for preparing the same, and a secondary battery and an electrical device related the same. The separator includes a porous substrate and a coating disposed on at least one surface of the porous substrate, in which the coating includes a three-dimensional skeleton structure and fillers having a porous structure, and at least part of the fillers having the porous structure is filled into the three-dimensional skeleton structure.

FIGURE 1

**Description**

TECHNICAL FIELD

The present application relates to a separator, a method for preparing the same, and a secondary battery and an electrical device related to the same.

BACKGROUND

In recent years, secondary batteries have been widely used in energy storage power supply systems such as hydroelectric, thermal, wind, and solar power plants, and in many other fields including electric tools, electric bicycles, electric motorcycles, electric vehicles, military equipment, and aerospace. With the application and popularization of secondary batteries, reliability issues, especially thermal safety issues, of secondary batteries have received increasing attention. Nevertheless, current methods for improving thermal safety performance of secondary batteries usually are not conducive to balancing the electrochemical performance of secondary batteries. Therefore, a key challenge in the design of secondary batteries is how to balance high thermal stability and good electrochemical performance.

SUMMARY

The present application provides a separator, a method for preparing the separator, and a secondary battery and electrical device related to the separator. The separator allows the secondary battery to achieve balance among high thermal stability, long cycle life, and good dynamic performance.

In a first aspect, the present application provides a separator including a porous substrate and a coating disposed on at least one surface of the porous substrate, in which the coating includes a three-dimensional skeleton structure and fillers having a porous structure, and at least part of the fillers having the porous structure are filled into the three-dimensional skeleton structure.

By disposing the coating including the three-dimensional skeleton structure and the fillers having the porous structure on the surface of the separator substrate and filling the least a part of the porous structure into the three-dimensional skeleton structure, the separator can achieve high thermal resistance, high adhesion, and high ion-conductivity, and also have good electrolyte infiltration and retention performance, thereby enabling secondary batteries to achieve high thermal stability, long cycle life, and good dynamic performance.

In some embodiments of the present application, the separator satisfies $0 < D_1/(d_1/\sqrt{6}) \leq 1$ and $0 < d_1/(L_1/\sqrt{2}) \leq 1$, in which a volume distribution particle size Dv50 of the fillers having the porous structure is denoted as $d_1$, in units of nm, an average diameter of the material constituting the three-dimensional skeleton structure is denoted as $D_1$, in units of nm, and an average length of the material constituting the three-dimensional skeleton structure is denoted as $L_1$, in units of nm. By adjusting $D_1/(d_1/\sqrt{6})$ and $d_1/(L_1/\sqrt{2})$ to fall within the above ranges, the fillers having the porous structure and the three-dimensional skeleton structure may advantageously connect with each other to form an integrated structure, and the coating may have a more stable spatial network structure. As a result, the separator can have further improved thermal resistance, adhesion, and ion-conductivity, and accordingly the secondary battery can have improved thermal stability, cycling performance, and dynamic performance.

In some embodiments of the present application, $0.02 \leq D_1/(d_1/\sqrt{6}) \leq 0.85$, and optionally $0.05 \leq D_1/(d_1/\sqrt{6}) \leq 0.65$.

In some embodiments of the present application, $0.04 \leq d_1/(L_1/\sqrt{2}) \leq 0.8$, and optionally $0.10 \leq d_1/(L_1/\sqrt{2}) \leq 0.7$.

Under the condition, the thermal resistance, adhesion and the ion-conductivity of the separator can be improved. Also, the thermal stability, cycling performance, and dynamic performance of the secondary battery better can be improved.

In some embodiments of the present of the present application, the volume distribution particle size Dv50 of the fillers having the porous structure is denoted as $d_1$, with $d_1$ being from 200 nm to 1500 nm, and optionally from 500 nm to 1200 nm. Under the condition that the volume distribution particle size Dv50 of the fillers having the porous structure is small, the fillers may be advantageously filled into the three-dimensional skeleton structure. As a result, an embedding effect is achieved, thereby improving the thermal resistance, adhesion, and ion-conductivity of the separator.

In some embodiments of the present of the present application, the average diameter of the material constituting the three-dimensional skeleton structure is denoted as $D_1$, with $D_1$ being equal to or less than 40nm, and optionally from 5 nm to 35 nm. Under the condition that the average diameter of the material constituting the three-dimensional skeleton structure falls within the above ranges, the ion conductivity and the voltage breakdown resistance of the separator can be further improved. Also, the fillers having the porous structure are advantageously connected to the three-dimensional skeleton structure to form an integrated structure. Accordingly, the thermal resistance of the separator can be further improved.

In some embodiments of the present of the present application, an average length of the material constituting the three-dimensional skeleton structure is denoted as $L_1$, with $L_1$ being from 300 nm to 3000 nm, and optionally from 400 nm to 2500 nm. Under the condition that the average length of the materials constituting the three-dimensional skeleton structure falls within the above ranges, the thermal resistance and ion-conductivity of the separator can be further improved.

In some embodiments of the present of the present application, the average pore size of the fillers having the porous structure is from 0.1 nm to 1.5nm, and optionally from 0.3 nm to 1.0 nm. Under the condition that the average pore size of filler having the porous structure falls within the above ranges, the ion-conductivity of the coating can be improved and the infiltration and retention performances for the electrolytic solution may be improved. Further, the cycling performance and the dynamic performance of the secondary battery can be improved.

In some embodiments of the present of the present application, a true density of the fillers having the porous structure is from 1.0 g/cm$^3$ to 2.0 g/cm$^3$, and optionally from 1.2 g/cm$^3$ to 1.7 g/cm$^3$. Under the condition that the true density of the fillers having the porous structure fall within the above ranges, the ion-conductivity of the coating can be improved and the infiltration and retention performances for the electrolytic solution may be improved. Further, the cycling performance and the dynamic performance of the secondary battery can be improved.

In some embodiments of the present of the present application, a powder compaction density at 30000N of the fillers having the porous structure is from 0.3 g/cm$^3$ to 1.5g/cm$^3$, and optionally from 0.5g/cm$^3$ to 1.0g$^3$. Under the condition that the powder comparation density of the fillers having a porous structure fall within the above ranges, the ion-conductivity of the coating can be improved and the infiltration and retention performances for the electrolytic solution may be improved. Further, the cycling performance and the dynamic performance of the secondary battery can be improved.

In some embodiments of the present of the present application, a specific surface area of the fillers having the porous structure is from 700 m$^2$/g to 3000 m$^2$/g, and optionally from 800 m$^2$/g to 2500 m$^2$/g. Under the condition that the fillers having the porous structure has the specific surface area fall within the above ranges, they may have good affinity with the three-dimensional skeleton structure. Accordingly, the adhesion effect can still be improved even if the amount of the binder is reduced, which allows reduced blocking pores by the binder. As a result, the cycling performance and the dynamic performance of the secondary battery can be improved.

In some embodiments of the present of the present application, the fillers having the porous structure include at least one of inorganic porous particles or organic porous particles.

In some embodiments of the present of the present application, the fillers having a porous structure include at least one of porous aluminium oxide, porous silicon dioxide, porous zirconium dioxide, porous titanium dioxide, porous zinc oxide, porous magnesium oxide, porous calcium carbonate, molecular sieve, zeolite, or the respective modified materials thereof.

In some embodiments of the present of the present application, the organic porous particles include at least one of porous polymer materials, covalent organic framework materials, metal organic framework materials, or the respective modified materials thereof.

In some embodiments of the present of the present application, the fillers having the porous structure are present in an amount of from 50 wt% to 97 wt%, and optionally from 63 wt% to 93 wt%, based on a total weight of the coating. Under the condition that the content of the fillers having a porous structure fall within the above ranges, the thermal resistance, the ion-conductivity, and the infiltration and retention for the electrolytic solution of the separator can be further improved.

In some embodiments of the present of the present application, the three-dimensional skeleton structure is present in an amount of from 1 wt% to 48 wt%, and optionally from 5 wt% to 35 wt%, based on the total weight of the coating.

In some embodiments of the present of the present application, the material constituting the three-dimensional skeleton structure includes at least one of filaments, rods, tubes, or bars. Materials having appropriate shapes are conducive to forming a stable spatial network structure from the three-dimensional skeleton structure and filler having a porous structure. As a result, the thermal resistance, the ion-conductivity and the infiltration and retention performances for the electrolytic solution of the separator can be further improved.

In some embodiments of the present of the present application, the material constituting the three-dimensional skeleton structure has an aspect ratio of from 5 to 150, and optionally from 30 to 95. Under the condition that the aspect ratio of material constituting a three-dimensional skeleton structure falls within the above ranges, the ion-conductivity and the infiltration and retention performances for the electrolytic solution of the separator can be further improved.

In some embodiments of the present of the present application, the material constituting the three-dimensional skeleton structure includes at least one of organic materials or inorganic materials.

In some embodiments of the present of the present application, the organic material includes at least one of nanocellulose, polytetrafluoroethylene nanofiber, or polyamide nanofibers; and optionally, the nanocellulose includes at least one of cellulose nanofibers, cellulose nanowhisker, or bacterial nanocellulose.

In some embodiments of the present of the present application, the inorganic material includes at least one of halloysite nanotube, rod nanoalumina, rod nanoboehmite, rod nanosilica, or glass fibers.

In some embodiments of the present of the present application, the material constituting the three-dimensional skeleton structure includes nanocellulose, wherein the nanocellulose includes at least one of unmodified nanocellulose or modified nanocellulose.

In some embodiments of the present of the present application, the modified nanocellulose includes a modifying group including at least one of an amino group, a carboxyl group, an aldehyde group, a sulfonic acid group, a boric acid group, or a phosphoric acid group, and more optionally including at least one of a sulfonic acid group, a boric acid group, or a phosphate group. Under the condiotion that the nanocelluloses have the above-mentioned specific modifying groups, the thermal resistance of the separator can be effectively improved; the adhesion strength between coating and porous substrate can be improved; and the nanocelluloses are advantageously connected with the fillers having a porous structure to form an integrated structure.

In some embodiments of the present of the present application, the modified nanocelluloses a hydroxyl group and a modified group, in which a molar ratio of the modifying group to the hydroxyl group is from 1:4 to 4:1, and more optionally from 2:3 to 7:3. Under the condition that the molar ratio of the modifying group to the hydroxyl group falls within the above ranges, the thermal resistance, the ion-conductivity, and the infiltration and retention performances for electrolytic solution of separator can be further improved.

In some embodiments of the present of the present application, the material constituting the three-dimensional skeleton structure comprises a sulfonic acid group, and wherein the material constituting the three-dimensional skeleton structure has a sulfur element content of $\geq 0.1$ wt%, and optionally from 0.2 wt% to 0.5 wt%, based on a total weight of the material constituting the three-dimensional skeleton structure.

In some embodiments of the present of the present application, the coating further comprises a non-granular binder.

In some embodiments of the present of the present application, the non-granular binder comprises an aqueous solution binder.

In some embodiments of the present of the present application, the non-granular binder in the coating is present in an amount of $\leq 4$wt%, based on the total weight of the coating. The three-dimensional skeleton structure, the fillers having the porous structure, etc. in the coating can form a stable spatial network structure. Accordingly, the separator can still maintain high adhesion even if the amount of the binder is reduced.

In some embodiments of the present application, the porous substrate has a thickness of $\leq 6\ \mu$m, and optionally from 3 $\mu$m to 5 $\mu$m. The coating of the present application allows significant improvement of the thermal resistance of the separator, so the porous substrate having smaller thickness may be selected. As such, the energy density of the secondary battery can be improved.

In some embodiments of the present of the present application, the coating has a thickness of $\leq 1.5\ \mu$m, and optionally from 0.5 $\mu$m to 1.2 $\mu$m. Under the circumstances, the secondary battery can have improved energy density.

In some embodiments of the present of the present application, the separator further comprises a binder layer disposed on at least part of the surface of the coating. The binder layer can prevent the coating from peeling off, which allows improved reliability of the secondary battery. Also, the binder layer can improve the interface between the separator and the electrode(s), which is conductive in improving the cycling performance of the secondary battery.

In some embodiments of the present of the present application, the binder layer comprises a granular binder.

In some embodiments of the present of the present application, the granular binder comprises at least one of homopolymers or copolymers of acrylate monomer, homopolymers or copolymers of acrylic monomer, or homopolymers or copolymers of fluorinated olefin monomer.

In some embodiments of the present of the present application, the separator has a longitudinal thermal shrinkage rate of $\leq 4\%$, and optionally from 0.5% to 3.8%, at 135°C for 1 hour.

In some embodiments of the present of the present application, the separator has a transverse thermal shrinkage rate of $\leq 4\%$, and optionally from 0.5% to 3.8%, at 135°C for 1 hour.

In some embodiments of the present of the present application, the separator has a longitudinal tensile strength of $\geq 1600$ kg/cm$^2$, and optionally from 1800 kg/cm$^2$ to 4500 kg/cm$^2$.

In some embodiments of the present of the present application, the separator has a transverse tensile strength of $\geq 1600$ kg/cm$^2$, and optionally from 1800 kg/cm$^2$ to 4500 kg/cm$^2$.

In some embodiments of the present of the present application, the separator has an infiltration length of $\geq 20$ mm, and optionally from 30 mm to 80 mm.

In some embodiments of the present of the present application, the separator has an infiltration speed of $\geq 3$ mm/s, and optionally from 3 mm/s to 10 mm/s.

In some embodiments of the present of the present application, the separator has an air permeability of $\leq 350$ s/100mL, and optionally from 120 s/100mL to 260 s/100mL.

In a second aspect, the present application provides a method for preparing the separator according to any one of claims 1-16, including the steps of:

providing a porous substrate;

mixing a material constituting the three-dimensional skeleton structure with fillers having a porous structure in a solvent at a predetermined ratio to prepare a coating slurry;

applying the coating slurry onto at least one surface of the porous substrate followed by drying to obtain a separator, wherein the separator includes the porous substrate and the coating disposed on at least one surface of the porous substrate, and wherein the coating includes a three-dimensional skeleton structure and the fillers having the porous structure, and at least part of the fillers having the porous structure are filled into the three-dimensional skeleton structure.

In a third aspect, the present application provides a secondary battery including the separator according to the first aspect of the present application or the separator prepared according to the second aspect of the present application.

In a fourth aspect, the present application provides an electrical device including the secondary battery according to the third aspect of the present application.

The separator provided in the present application allows the secondary battery to have high thermal stability, good cyclic performance, and dynamic performance. The electrical device of the present application includes the secondary battery provided in the present application and thus has, among others, advantages identical to the secondary battery.

## DESCRIPTION OF THE DRAWINGS

In order to provide a clear explanation of the technical solution of the embodiments of the present application, brief introductions will be given to the accompanied drawings mentioned in the embodiments of the present application. It is evident that the accompanied drawings described hereinbelow show only some embodiments of the present application. For ordinary technical personnel in the art, other accompanied drawings can be obtained based on the drawings without any creative effort.

Figure 1 is a schematic diagram of a secondary battery of one embodiment of the present application.

Figure 2 is an exploded view of the secondary battery of one embodiment of the present application as shown in Figure 1.

Figure 3 is a schematic diagram of a battery module of one embodiment of the present application.

Figure 4 is a schematic diagram of a battery pack of one embodiment of the present application.

Figure 5 is an exploded view of the battery pack of the embodiment of the present application as shown in Figure 4.

Figure 6 is a schematic diagram of an electrical device including the secondary battery of the present application as a power supply, according to the embodiment of the present application.

The accompanied drawings are not drawn to actual scale. Reference numerals are as follows: 1. Battery pack; 2. Upper box body; 3. Lower box body; 4. Battery module; 5. Secondary battery; 51. Housing; 52. Electrode assembly; 53. Cover plate.

## DETAILED DESCRIPTION

Hereinafter, embodiments of the separator of the present application, the method for preparing the same, and the secondary battery and the electrical device will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2-3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise/include/contain" and "comprising including/containing" mentioned in the present application mean that it is drafted in an open mode or may be in a close mode. For example, the transition phases "comprise", "comprising", "contain" and "containing" may mean that other components not listed may also be included or contained, or only the listed components may be included or contained.

Unless otherwise specified, the term "or" used in the present application is inclusive. For example, the phrase "A or B" means "A, B, or both A and B". More specifically, any of the following conditions satisfy the condition "A or B": A is true (or exists) and B is false (or does not exist); A is false (or does not exist) and B is true (or exists); or both A and B are true (or exist).

Unless otherwise specified, the terms "first", "second", etc. used in the present application are used to distinguish between different objects and not intended to describe a particular order or a primary or secondary relationship.

Unless otherwise specified, the terms used in the present application have well-known meanings generally understood by those skilled in the art.

Unless otherwise specified, a numerical value for each parameter mentioned in the present application may be determined by various test methods commonly used in the art, for example, can be determined according to the test methods given in the present application. Unless otherwise specified, all parameters are tested at 25 °C.

Normally, a secondary battery includes an electrode assembly and an electrolytic solution, in which the electrode assembly includes a positive electrode plate, a negative electrode plate, and a separator, and the separator is disposed between the positive electrode plate and the negative electrode plate; the separator has main use of preventing short circuit between the positive electrode and the negative electrode and also allows active ions to freely pass through to form a circuit. The separator is an important component of a secondary battery, so its performances may directly affect the performances of the secondary battery.

At present, separators used in commercial secondary batteries are usually polyolefin porous film. The polyolefin porous film has poor heat resistance, so when being heated, it will undergo great thermal shrinkage, which results in direct contact between the positive electrode and the negative electrodes inside the battery and in turn results in an internal short circuit; accordingly, the safety risk of secondary batteries will be increased. In addition, the separator should have good infiltration and retention performances for the electrolytic solution.

In order to solve the above problems, technical means currently used are applying a thermal resistant inorganic ceramic layer on the polyolefin porous film. The inorganic ceramic layer, however, has a series of problems, such as having high requirements on the thickness of the coating, having limited effect on improving the heat resistance of the separator when being applied in a thin layer, having improved thermal resistance but also increased internal resistance of the battery when being applied in a thick layer, having high requirements on arrangement compactness of inorganic ceramic particles, having limited effect of improving the thermal resistance of the separator when inorganic ceramic particles are disposed loosely, and having improved thermal resistance on the separator but will result in blocked pores when inorganic ceramic particles are disposed tightly. As a result, the cycling performance and the dynamic performance of the secondary battery will be affected.

Therefore, the separator of the existing technology is difficult to allow the secondary battery to have high thermal stability and also have long cycle life and good dynamic performance.

The inventors of the present application, during researching, has surprisingly found that by means of disposing a coating including a three-dimensional skeleton structure and fillers having a porous structure on a porous substrate of the separator, and by means of filling at least part of the fillers having the porous structure into the three-dimensional skeleton structure, the separator may have high thermal resistance, high adhesion, high ion-conductivity and also have good infiltration and retention performance for the electrolytic solution. Further, the separator may allow the secondary battery to have high thermal stability and also long cycle life and good dynamic performance.

### Separator

In the first aspect, the present application provides a separator including a porous substrate and a coating disposed on at least one surface of the porous substrate, in which the coating includes a three-dimensional skeleton structure and fillers having a porous structure, and at least part of the fillers having the porous structure are filled into the three-dimensional skeleton structure.

The term "three-dimensional skeleton structure" usually refers to a structure which has a three-dimensional spatial shape and some pores and may be formed by the overlapping of the materials constituting the three-dimensional skeleton structure.

The fillers having a porous structure usually means that the fillers have a regular or an irregular pore structure that allows ions to pass through. During the long-term charging and discharging of the secondary battery, the gradual drying-up and failing of the separator is one of the important reasons that lead to the capacity fade and shorten service life of the secondary battery. When the separator dries up, the internal resistance of the battery increases and thus the fully charging and discharging cannot be achieved; accordingly, the capacity of the secondary battery fades fast and thus the service life of the secondary battery become short greatly. The separators provided in embodiments of the present application have the coating including fillers having a porous structure, which facilitates the storage of the electrolytic solution and the release of the electrolytic solution during the long-term charging and discharging of the secondary battery. Accordingly, the ion-conductivity of the coating and the infiltration and retention performances for the electrolytic solution can be improved, thereby improving the cycling performance and dynamic performance of the secondary battery.

The fillers having the porous structure may have the advantage of having large specific surface area, also, it may have good affinity with the three-dimensional skeleton structure. Accordingly, the adhesion effect can still be improved even if the amount of the binder is reduced, which allows reduced blocking pores by the binder. As a result, the cycling performance and the dynamic performance of the secondary battery can be improved.

At least part of the fillers having the porous structure are filled into the three-dimensional skeleton structure. In this case, the thermal resistance of the separator is advantageously increased and the shrinkage of the separator due to being heated is deceased; as a result, the risk of short circuit between the positive electrode and the negative electrode decease, allowing high thermal stability of the secondary battery. In addition, the coating and the porous substrate have high adhesion strength, so the fillers having the porous structure have reduced probability of peeling off during the long-term charging and discharging of the secondary battery. Also, because at least part of filler having the porous structure is filled into the three-dimensional skeleton structure, the fillers having the porous structure have many contact points with the three-dimensional skeleton structure; accordingly, the amount of the binder can be reduced, which allows reduced blocking pores by the binder. As a result, the cycling performance and the dynamic performance of the secondary battery can be improved.

Therefore, the separators provided in the embodiments of the present application have high thermal resistance, high binding, and high ion-conductivity, and also have good infiltration and retention performance for electrolytic solution. Accordingly, the secondary battery using the separators can have high thermal stability, long cycle life, and also good dynamic performance.

In some embodiments, at least part of the fillers having the porous structure are filled into the three-dimensional skeleton structure, and the other part of the fillers having the porous structure may be located on the surface of the three-dimensional skeleton structure and/or on the interface between the three-dimensional skeleton structure and the porous substrate. At the interface between the three-dimensional skeleton structure and the porous substrate, there may also be a small amount of the fillers having the porous structure embedded in the porous substrate. For example, during the winding of the electrode assembly, a small amount of the fillers having the porous structure, due to external pressure, is embedded in the substrate and/or the pores of the porous substrate.

In some embodiments, the separator satisfies $0 < D_1/(d_1/\sqrt{6}) \leq 1$ and $0 < d_1/(L_1/\sqrt{2}) \leq 1$, in which the fillers having the porous structure have the volume distribution particle size Dv50 denoted as $d_1$, in units of nm, the material constituting the three-dimensional skeleton structure has an average diameter denoted as $D_1$, in units of nm, and the material constituting the three-dimensional skeleton structure has an average length denoted as $L_1$, in units of nm.

By adjusting $D_1/(d_1/\sqrt{6})$ and $d_1/(L_1/\sqrt{2})$ to fall within the above ranges, the fillers having the porous structure and the three-dimensional skeleton structure may advantageously connect with each other to form an integrated structure, and the coating may have a more stable spatial network structure. As a result, the separator can have further improved thermal resistance, adhesion, and ion-conductivity, and accordingly the secondary battery can have improved thermal stability, cycling performance, and dynamic performance.

Optionally, $0.02 \leq D_1/(d_1/\sqrt{6}) \leq 0.85$, and more optionally $0.03 \leq D_1/(d_1/\sqrt{6}) \leq 0.75$, $0.05 \leq D_1/(d_1/\sqrt{6}) \leq 0.65$, $0.052 \leq D_1/(d_1/\sqrt{6}) \leq 0.5$, and $0.055 \leq D_1/(d_1/\sqrt{6}) \leq 0.45$. Under the condition, the thermal resistance, adhesion, and ion-conductivity of the separator can be further improved. Also, the thermal stability, cycling performance, and dynamic performance of the secondary battery better can be improved.

Optionally, $0.04 \leq d_1/(L_1/\sqrt{2}) \leq 0.8$, and more optionally $0.10 \leq d_1/(L_1/\sqrt{2}) \leq 0.7$, $0.12 \leq d_1/(L_1/\sqrt{2}) \leq 0.7$, $0.14 \leq d_1/(L_1/\sqrt{2}) \leq 0.7$, $0.15 \leq d_1/(L_1/\sqrt{2}) \leq 0.68$. Under the condition, the thermal resistance, adhesion, and ion-conductivity of the separator can be further improved. Also, the thermal stability, cycling performance, and dynamic performance of the secondary battery better can be improved.

In some embodiments, $0.05 \leq D_1/(d_1/\sqrt{6}) \leq 0.65$ and $0.10 \leq d_1/(L_1/\sqrt{2}) \leq 0.7$, and optionally, $0.055 \leq D_1/(d_1/\sqrt{6}) \leq 0.45$ and $0.15 \leq d_1/(L_1/\sqrt{2}) \leq 0.68$. Under the condition, the thermal resistance, adhesion, and ion-conductivity of the separator can be further improved. Also, the thermal stability, cycling performance, and dynamic performance of the secondary battery better can be improved.

In some embodiments of the present of the present application, the fillers having the porous structure have the volume distribution particle size Dv50 denoted as $d_1$, with $d_1$ being from 200 nm to 1500 nm, and optionally from 500 nm to 1200 nm. Under the condition that the fillers having the porous structure has small volume distribution particle size Dv50, the fillers may be advantageously filled into the three-dimensional skeleton structure. As a result, an embedding effect is achieved, thereby improving the thermal resistance, adhesion, and ion-conductivity of the separator.

The volume distribution particle size Dv50 of a material has a meaning well-known in the art. It corresponds the particle size of the material when the cumulative volume distribution percentage of the material reaches 50%. It may be tested on instruments and methods well-known in the art. For example, it may be tested according to GB/T 19077-2016 on a laser particle Size analyzer (such as Master Size 3000).

Optionally, the porous structure of the fillers having the porous structure may be a microporous structure. In some embodiments, the fillers having the porous structure have the average pore size of from 0.1 nm to 1.5nm, and optionally from 0.3 nm to 1.0 nm. Under the condition that the average pore size of filler having the porous structure falls within the above ranges, the ion-conductivity of the coating can be improved and the infiltration and retention performances for the electrolytic solution may be improved. Further, the cycling performance and the dynamic performance of the secondary battery can be improved.

The average pore size of the fillers having the porous structure have a meaning well-known in the art. It may be tested on instruments and methods well-known in the art. For example, it may be tested using a static volumetric method according to GB/T 19587. During the test, both the adsorption gas and the carrier gas may be nitrogen.

In some embodiments, the fillers having the porous structure have a true density of from $1.0 \text{ g/cm}^3$ to $2.0 \text{ g/cm}^3$, and optionally from $1.2 \text{ g/cm}^3$ to $1.7 \text{ g/cm}^3$. Under the condition that the true density of the fillers having the porous structure fall within the above ranges, the ion-conductivity of the coating can be improved and the infiltration and retention performances for the electrolytic solution may be improved. Further, the cycling performance and the dynamic performance of the secondary battery can be improved.

The true density of the fillers having the porous structure have a meaning well-known in the art. It and may be tested on instruments and methods well-known in the art. For example, it may be tested according to GB/T 24586-2009. In particular, it is tested via a gas replacement method, using inert gases (such as helium or nitrogen) as the medium on a true density tester, obtaining to a true volume $V_t$ of a test sample. True density of the fillers having the porous structure = mass of test sample / true volume Vt of test sample.

In some embodiments, the fillers having the porous structure have a powder compaction density at 30000N of from 0.3 g/cm$^3$ to 1.5g/cm$^3$, and optionally from 0.5 g/cm$^3$ to 1.0 g/cm$^3$. Under the condition that the powder compaction density of the fillers having a porous structure fall within the above ranges, the ion-conductivity of the coating can be improved and the infiltration and retention performances for the electrolytic solution may be improved. Further, the cycling performance and the dynamic performance of the secondary battery can be improved.

The powder compaction density of a material has a meaning well-known in the art. It may be tested using instruments and methods well-known in the art. For example, it may be tested on an electronic pressure test machine (such as UTM7305) according to the standard GB/T24533-2009. An exemplary test method is as follows: Weighing 1 g of material, adding it into a mold having a base area of 1.327 cm$^2$, pressing to 30000N and holding the pressure for 30 s, and then releasing the pressure and holding for 10 s; recording and calculating the powder compaction density at 30000N of the material.

In some embodiments of the present of the present application, the fillers having the porous structure have a specific surface area of from 700 m$^2$/g to 3000 m$^2$/g, and optionally from 800 m$^2$/g to 2500 m$^2$/g. Under the condition that the fillers having the porous structure have the specific surface area falls within the above ranges, it may have good affinity with the three-dimensional skeleton structure. Accordingly, the adhesion effect can still be improved even if the amount of the binder is reduced, which allows reduced blocking pores by the binder. As a result, the cycling performance and the dynamic performance of the secondary battery can be improved.

The specific surface area of a material has a meaning well-known in the art. It may be tested using instruments and methods well-known in the art. For example, it may be tested using a method of determination of specific surface area by nitrogen adsorption according to GB/T 19587-2017 and may be calculated using BET (Brunauer Emmett Teller) method. Optionally, the determination of specific surface area by nitrogen adsorption may be conducted on Tri-Star 3020 Specific Surface Area and Aperture Analysis Tester from Micromeritics, USA.

In some embodiments, the fillers having the porous structure include at least one of inorganic porous particles or organic porous particles.

Optionally, the fillers having a porous structure include at least one of porous aluminium oxide, porous silicon dioxide, porous zirconium dioxide, porous titanium dioxide, porous zinc oxide, porous magnesium oxide, porous calcium carbonate, molecular sieve (such as type A, type X, type Y, type M, and type ZSM), zeolite, or the respective modified materials thereof.

Optionally, the organic porous particles may include at least one of porous polymer materials, covalent organic framework materials (COF), metal organic framework materials (MOF), or the respective modified materials thereof. As examples, the metal organic frame materials may include Prussian blue, ZIF series (such as ZIF-8 and ZIF-68), UiO series, CPL series, MIL series, or the respective modified materials thereof.

Optionally, modifications may be made chemical modifications and/or physical modifications. The chemical modifications include coupling agent modification (such as silane coupling agent and titanate coupling agent), surfactant modification, and polymer grafting modification. The physical modifications may include mechanical dispersion, ultrasonic dispersion, and high energy treatment.

In some embodiments, the fillers having the porous structure are present in the amount of from 50 wt% to 97 wt%, and optionally from 63 wt% to 93 wt%, based on the total weight of the coating. Under the condition that the content of the fillers having a porous structure fall within the above ranges, the thermal resistance, the ion-conductivity, and the infiltration and retention for the electrolytic solution of the separator can be further improved.

In some embodiments, the three-dimensional skeleton structure is present in the amount of from 1 wt% to 48 wt%, and optionally from 3 wt% to 38 wt% and from 5 wt% to 35 wt%, based on the total weight of the coating.

In some embodiments, the material constituting the three-dimensional skeleton structure includes at least one of filaments, rods, tubes, or bars. Materials having appropriate shapes are conducive to forming a stable spatial network structure from the three-dimensional skeleton structure and filler having a porous structure. As a result, the thermal resistance, the ion-conductivity and the infiltration and retention performances for the electrolytic solution of the separator can be further improved.

In some embodiments, the material constituting the three-dimensional skeleton structure includes at least one of organic materials or inorganic materials.

Optionally, the organic material may include at least one of nanocellulose, polytetrafluoroethylene nanofiber, or polyamide nanofibers;

Optionally, the inorganic material includes at least one of halloysite nanotube, nanorod-shaped alumina, nanorod-shaped boehmite, nanorod-shaped silica, or glass fibers.

In some embodiments, the material constituting the three-dimensional skeleton structure may include nanocellulose. Optionally, the nanocellulose may include at least one of cellulose nanofibrils (CNF, also referred to as nanofibril cellulose or microfibril cellulose), cellulose nanocrystals (CNC, also referred to as cellulose nanowhiskers, nanocrystalline cellulose), or bacterial nanocellulose (BNC, also referred to as bacterial cellulose or microbial cellulose).

Nanocellulose refers to the general term of cellulose having any one dimensional size of nanoscale (for example, 100 nm or lower), and has the properties of both cellulose and nanoparticles, and may be a polymer nanomaterial extracted from wood, cotton, and straw and the like in nature through one or more means in chemistry, physics, biology, etc. It has the advantages including for example wide sources, low cost, biodegradability, high modulus and high specific surface area, so it is an excellent substitute for traditional petrochemical resources and can effectively alleviate the problems such as environmental pollution and shortage of petrochemical resources. Nanocellulose also has good high temperature resistance characteristics and small volume change after being heated, thus can improve the thermal resistance of the separator. In addition, as compared with traditional inorganic ceramic particles, the nanocellulose has lower density, which can also reduce the weight of the secondary battery and increase the weight energy density of the secondary battery. Further, the three-dimensional skeleton structure formed from nanocellulose can have tiny nanopores, which prevent current leakage. Thus, the separator can have good infiltration and retention performance for the electrolytic solution and also have good voltage breakdown resistance.

In some embodiments, the nanocellulose may include at least one of unmodified nanocellulose (also known as hydroxyl nanocellulose), or modified nanocellulose. Optionally, it is the modified nanocellulose.

The modified nanocellulose refers to a nanocellulose that includes hydroxyl and modified groups. In some embodiments, the modifying group may include at least one of an amino group, a carboxylic acid group, an aldehyde group, a sulfonic acid group, a boric acid group, or a phosphoric acid group, and optionally includes at least one of a sulfonic acid group, a boric acid group, or a phosphoric acid group.

Under the condition that the nanocellulose has the above-mentioned specific modifying groups, on one hand, the thermal resistance of the separator can be effectively improved and the thermal stability of the secondary battery can be improved, and on the other hand, the adhesion strength between the porous substrate and the coating can be improved. Under the condition that the nanocellulose has the above-mentioned specific modifying groups, the nanocellulose and the fillers having the porous structure may advantageously connect with each other to form an integrated structure, and the coating may have a more stable spatial network structure. As a result, the separator can have improved infiltration and retention performances for the electrolytic solution and improved ion-conductivity and voltage breakdown resistance. In addition, the modifying groups may further reduce the proportion of hydroxyl groups. Accordingly, the coating slurry can have an appropriate viscosity and thus is readily to be applied, thereby improving the production efficiency of separator and the uniformity of coating.

In some embodiments, a molar ratio of the modifying group to the hydroxyl groups may be from 1:4 to 4:1, and optionally 2:3 to 7:3. Under the condition that the molar ratio of the modifying groups to the hydroxyl group falls within the above ranges, the thermal resistance, the ion-conductivity, and the infiltration and retention performance for the electrolytic solution of separator can be further improved. In addition, the following situations can be effectively avoided: if the molar ratio of the modifying group to the hydroxyl group is too small, the thermal resistance and the ion-conductivity of separator cannot be substantially improved by the modifying group; if the molar ratio of the modifying group to the hydroxyl group is too large, the separator may have deteriorated infiltration and retention performances for the electrolytic solution. Thus, the cycling performance and the reliability of the secondary battery can be affected, and the thermal resistance of the separator can be reduced. Further, the improvement of the thermal stability of the secondary battery can be affected.

The types of modifying group in the nanocellulose may be tested by an infrared spectroscopy method. For example, a test material may be tested to obtain the infrared spectrum including characteristic peaks, which can be used for determining the types of the modifying group. In particular, the material may be analyzed using instruments and methods well-known in the art, for example on an infrared spectrometer (such as IS10 Fourier transform infrared spectrometers from Nicolet, the United States) according to GB/T 6040-2019 General Rules for Infrared Analysis.

In some embodiments, the material constituting the three-dimensional skeleton structure includes a sulfonic acid group, in which the material constituting the three-dimensional skeleton structure has a sulfur element content of $\geq 0.1$ wt%, and optionally from 0.2 wt% to 0.5 wt%, based on the total weight of the material constituting the three-dimensional skeleton structure. Optionally, the material constituting the three-dimensional skeleton structure includes the nanocellulose.

The sulfur element content in the material constituting the three-dimensional skeleton structure may be tested according to the following method: drying the material constituting the three-dimensional skeleton structure and then grounding it in a mortar (for example, an agate mortar) for 30 min, afterwards, testing with an X-ray diffractometer (for example Miniflex 600-C) to obtain the sulfur element content. The test may be performed using a Cu target and a Ni filter, with a tube voltage of 40 KV, a tube current of 15 mA, and a continuous scanning range of from 5° to 80°.

In some embodiments, the material constituting the three-dimensional skeleton structure has the average diameter of denoted as D1, in which D1 may be equal to or less than 40nm, and optionally from 5 nm to 35 nm, from 8 nm to 35 nm, from 10 nm to 35 nm, and from 12 nm to 32 nm. Under the condition that the average diameter of the material constituting the three-dimensional skeleton structure falls within the above ranges, the ion-conductivity and voltage breakdown resistance of the separator can be further improved. Also, the material constituting the three-dimensional skeleton structure and the fillers having the porous structure may advantageously connect with each other to form an integrated structure, thereby further improving the thermal resistance of the separator. In addition, the following situations can be effectively avoided: If the material constituting the three-dimensional skeleton structure has too large average diameter, the three-dimensional skeleton structure as formed will have insufficient intertwining and have large porosity. Accordingly, the thermal resistance and voltage breakdown resistance of the separator may not be excellent enough. In addition, it is not conducive to achieve an integration effect with the fillers having the porous structure. And during drying the coating, the three-dimensional skeleton structure may be prone to collapse due to the lack of supportiveness by the fillers having the porous structure and thus will directly contact with the porous substrate, which will result in blocked pores. Thus, the ion-conductivity of the separator can be affected.

In some embodiments, the material constituting the three-dimensional skeleton structure has the average length denoted as $L_1$, in which $L_1$ may be from 300 nm to 3000 nm, and optionally from 400 nm to 2500 nm, from 800 nm to 2250 nm, from 1000 nm to 2250 nm, and from 1200 nm to 2250 nm. Under the condition that the average length of the material constituting the three-dimensional skeleton structure falls within the above ranges, the thermal resistance and ion-conductivity of the separator can be further improved. In addition, the following situations can be effectively avoided: If the material constituting the three-dimensional skeleton structure has too short average length, it will have poor connection effect with the fillers having the porous structure. Accordingly, the coating has deteriorated thermal resistance. And during drying the coating, the three-dimensional skeleton structure may be prone to collapse due to the lack of supportiveness by the fillers having the porous structure, which will result in blocked pores and hinder ion transmission and water removing. Thus, the thermal stability, cycling performance, and dynamic performance of the secondary battery may be affected. If the material constituting the three-dimensional skeleton structure has too long average length, the coating slurry will have large viscosity and poor mobility; accordingly, the applying of the coating slurry may be affected and thus the coating quality may be affected. Further, for example, the thermal resistance and ion-conductivity of the separator may be affected.

In some embodiments, the material constituting the three-dimensional skeleton structure may have an aspect ratio of from 5 to 150, and optionally from 30 to 95, and from 40 to 90. Under the condition that the aspect ratio of the material constituting the three-dimensional skeleton structure falls within the above ranges, the ion-conductivity and the infiltration and retention performances for the electrolytic solution retention of the separator can be further improved. In addition, the following situations can be effectively avoided: If the material constituting the three-dimensional skeleton structure has too small aspect ratio, it will have poor connection effect with the fillers having the porous structure. Accordingly, the coating has deteriorated thermal resistance. And during drying the coating, the three-dimensional skeleton structure may be prone to collapse due to the lack of supportiveness by the fillers having the porous structure, which will result in blocked pores and hinder ion transmission and water removing. Thus, the thermal stability, cycling performance, and dynamic performance of the secondary battery may be affected. If the material constituting the three-dimensional skeleton structure has too large aspect ratio, the three-dimensional skeleton structure as formed has small pores, which may result in reduced ion-conductivity of the separator.

The average length and the average diameter of the material constituting the three-dimensional skeleton structure may be tested using a method comprising the following steps: cutting out a sample of 3.6 mm × 3.6 mm from any area of the separator, and mapping a microscopic morphology of the coating layer of the sample with a scanning electron microscope (for example, ZEISS Sigma 300) at a high vacuum mode, with a working voltage of 3 kV, a magnification of 30,000, to obtain a SEM image; according to the obtained SEM image, selecting a plurality of (for example, more than 5) test areas for length statistics, with each test area being 0.5 μm × 0.5 μm in size; and then taking the average value of the lengths obtained from each test area as the average length of the material constituting the three-dimensional skeleton structure; according to the obtained SEM image, using Nano Measurer particle size distribution statistics software, selecting a plurality of (for example, more than 5) test areas for diameter statistics, with each test area being 0.5 μm × 0.5 μm in size; and then taking the average value of the diameters obtained from each test area as the average diameter of the materials constituting the three-dimensional skeleton structure.

Under the condition that the material constituting the three-dimensional skeleton structure includes the nanocellulose, because the diameters at the ends of the nanocellulose in its lengthwise direction are usually smaller while the diameter at its middle position are usually larger, the maximum value of diameters of the nanocellulose in its lengthwise direction may be taken as a diameter of the nanocellulose. The diameter of other nanocelluloses may be taken in a similar manner. Then, the average diameters of the nanocellulose may be obtained using the aforementioned method and Nano Measurer particle size distribution statistics software.

In some embodiments, the coating may further include a non-granular binder. In the present application, the types of the non-granular binder are not particularly restricted. Any well-known materials having good adhesion may be selected. Optionally, the non-granular binder includes an aqueous solution binder, which has advantages of good thermodynamic stability and environmental protection, and thus facilitates the preparation and applying of the coating slurry. As examples, the aqueous solution binder may include at least one of aqueous solution acrylic resins (for example, the homo-polymer of acrylic acid, methacrylic acid, and sodium acrylate monomer, and the copolymer thereof with other co-monomers), polyvinyl alcohol (PVA), isobutene-maleic anhydride copolymer, or polyacrylamide.

Optionally, the non-granular binder in the coating has the content of ≤ 4wt%, based on the total weight of the coating. The three-dimensional skeleton structure, the fillers having the porous structure, etc. in the coating can form a stable spatial network structure. Accordingly, the separator can still maintain high adhesion even if the amount of the binder is reduced.

In some embodiments, the coating may have the thickness of $\leq 1.5\ \mu m$, and optionally from 0.5 $\mu m$ to 1.2 $\mu m$. Under the circumstances, the secondary battery can have improved energy density. The thickness of the coating refers to that of the coating on one side of the porous substrate.

In some embodiments, the porous substrate may have the thickness of $\leq 8\ \mu m$, optionally $\leq 6\ \mu m$, and optionally from 3 $\mu m$ to 5 $\mu m$. The coating of the present application allows significant improvement of the thermal resistance of the separator, so the porous substrate having smaller thickness may be selected. As such, the energy density of the secondary battery can be improved.

In the present application, materials of the porous substrate are not particularly restricted. Any well-known substrate having good chemical stability and mechanical stability can be selected. For example, the porous substrate may include at least one of a porous polyolefin-based resin film (for example, at least one of polyethylene, polypropylene, or polyvinylidene fluoride), a porous glass fibre, or a porous non-woven fabric. The porous substrate may be a monolayer film or a multilayer composite film. When the porous substrate is a multilayer composite film, materials for each layers may be the same or different.

In some embodiments, the separator may further include a binder layer, which may be disposed on at least part of surface of the coating layer. The binder layer can prevent the coating from peeling off, which allows improved reliability of the secondary battery. Also, the binder layer can improve the interface between the separator and the electrode(s), which is conductive in improving the cycling performance of the secondary battery.

Optionally, the granular binder may include at least one of a homopolymer or copolymer of acrylate monomer, a homopolymer or copolymer of acrylic monomer, or a homopolymer or copolymer of fluorine-containing olefin monomer. Co-monomers include, but are not limited to, at least one of an acrylate monomer, an acrylic monomer, an olefin monomer, a halogen-containing olefin monomer, or a fluoroether monomer.

Optionally, the granular binder may include a vinylidene fluoride-based polymer, such as a homopolymer of vinylidene fluoride monomer (VDF) and/or a copolymer of vinylidene fluoride monomer and a comonomer. Co-monomers may be at least one of an olefin monomer, a fluorine-containing olefin monomer, a chlorine-containing olefin monomer, an acrylate monomer, an acrylic monomer, or a fluoroether monomer. Optionally, the comonomers may include at least one of trifluoroethylene (VF3), chlorotrifluoroethylene (CTFE), 1,2-difluoroethylene, tetrafluoroethylene (TFE), hexafluoropropylene (HFP), perfluoro(alkylvinyl) ethers such as perfluoro(methylvinyl) ether (PMVE), perfluoro(ethylvinyl) ether (PEVE), perfluoro(propylvinyl) ether (PPVE), perfluoro(1,3-dioxole), or perfluoro(2,2-dimethyl-1,3-dioxole) (PDD).

In some embodiments, the separator has the longitudinal thermal shrinkage rate of $\leq 4\%$, and optionally from 0.5% to 3.8%, at 135°C for 1 hour.

In some embodiments, the separator has the transverse thermal shrinkage rate of $\leq 4\%$, and optionally from 0.5% to 3.8%, at 135°C for 1 hour.

The separator has the low thermal shrinkage rate in both transverse and longitudinal directions at a high temperature of 135°C, thus it allows improved reliability of the secondary battery.

In some embodiments, the separator has a longitudinal tensile strength of $\geq 1600\ kg/cm^2$, and optionally from 1800 $kg/cm^2$ to 4500 $kg/cm^2$.

In some embodiments, the separator has a transverse tensile strength of $\geq 1600\ kg/cm^2$, and optionally from 1800 $kg/cm^2$ to 4500 $kg/cm^2$.

The separator has high tensile strength in both transverse and longitudinal directions, thus, it has low possibility of breaking down when the secondary battery expands. Accordingly, the reliability of the secondary battery can be improved.

In some embodiments, the separator has an infiltration length of $\geq 20$ mm, and optionally from 30 mm to 80 mm.

In some embodiments, the separator has an infiltration speed of $\geq 3$ mm/s, and optionally from 3 mm/s to 10 mm/s.

The separator has good infiltration and retention performances for the electrolytic solution, so it has improved ion-conductivity. Thus, the secondary battery can have improved capacity exertion.

In some embodiments, the separator has an air permeability of $\leq 350$ s/100mL, and optionally from 120 s/100mL to 260 s/100mL. The separator has good air permeability, so it has improved ion-conductivity. Thus, the secondary battery can have improved capacity exertion.

In some embodiments, the separator includes the porous substrate and the coating disposed on at least one surface of the porous substrate, in which the coating includes the three-dimensional skeleton structure and the fillers having the porous structure, and at least part of the fillers having the porous structure are filled into the three-dimensional skeleton structure; in which $0 < D1/(d1/\sqrt{6}) \leq 1$ and $0 < d1/(L1/\sqrt{2}) \leq 1$, and optionally, $0.05 \leq D1/(d1/\sqrt{6}) \leq 0.65$ and $0.10 \leq d1/(L1/\sqrt{2}) \leq 0.7$, in which the volume distribution particle size Dv50 of the fillers having the porous structure have is denoted as $d_1$, in units of nm, the mean diameter of the material constituting the three-dimensional skeleton structure is denoted as $D_1$, in units of nm, the average length of the material constituting the three-dimensional skeleton structure is denoted as $L_1$, in units of nm. The volume distribution particle size Dv50 of the fillers having the porous structure is denoted as $d_1$, in which $d_1$ is from 200 nm to 1500 nm, and optionally from 500 nm to 1200 nm. The material constituting the three-dimensional skeleton structure include the nanocellulose. The mean diameter of the material constituting the three-dimensional skeleton structure is denoted as $D_1$, in which $D_1$ is equal to or less than 40 nm, and optionally from 5 nm to 35 nm. The average length of the material constituting the three-dimensional skeleton structure is denoted as $L_1$, in which $L_1$ is from 300nm to 3,000 nm, and optionally from 400 nm to 2,500 nm. Under the circumstances, the thermal resistance, the adhesion, and the ion-conductivity of the separator can be well improved. Further, the secondary battery can have good thermal stability and also have cycling performance and dynamic performance.

The thermal shrinkage, tensile strength, and air permeability of the separator have the meanings well-known in the art. They may be tested using methods well-known in the art, for example, according to GB/T 36363-2018.

The infiltration length and infiltration speed of the separator have meanings well-known in the art. They may be tested using methods well-known in the art. An exemplary test method is as follows: cutting the separator into a sample with a width of 5 mm and a length of 100 mm, placing the sample horizontally and fixing its two ends; taking a drop of 0.5 mg of an electrolytic solution and placing it on the center of the sample, and after a specified time (1 min for the present application), taking a picture and measuring the diffusion length of electrolytic solution, to give the infiltration length and infiltration speed of the separator. For accuracy, a plurality of samples (for example, 5 to 10) may be tested to give the test results by taking an average value. The electrolytic solution may be prepared as follows: mixing ethylene carbonate (EC), methyl ethyl carbonate (EMC), and diethyl carbonate (DEC) at a mass ratio of 30:50:20 to give an organic solvent, then dissolving a sufficient anhydrous $LiPF_6$ into the above organic solvent to prepare an electrolytic solution with a concentration of 1 mol/L.

It should be noted that the coating parameters (such as thickness) of the above separator are coating parameters on one side of the porous substrate. When the coating is applied to the two sides of the porous substrate, if it, on either side, has coating parameters satisfying the requirements of the present application, it is considered to fall within the scope of protection of this application.

## Preparation Methods

In a second aspect, the present application provides a method for preparing the separator according to the first aspect of the present application, including the steps of:

providing a porous substrate;
mixing a material constituting the three-dimensional skeleton structure with fillers having a porous structure in a solvent at a predetermined ratio to prepare a coating slurry;
applying the coating slurry onto at least one surface of the porous substrate followed by drying to obtain the separator, in which the separator includes the porous substrate and the coating disposed on at least one surface of the porous substrate, and wherein the coating includes the three-dimensional skeleton structure and the fillers having the porous structure, and at least part of the fillers having the porous structure are filled into the three-dimensional skeleton structure.

In some embodiments, the solvent used for preparing the coating slurry may be water, such as deionized water.

In some embodiments, the coating slurry may further include other components, for example, dispersants, wetting agents, and binders.

In some embodiments, the material constituting the three-dimensional skeleton structure includes at least one of organic materials or inorganic materials. Optionally, the organic material may include at least one of nanocellulose, polytetrafluoroethylene nanofiber, or polyamide nanofibers. Optionally, the inorganic material may include at least one of halloysite nanotube, nanorod-shaped alumina, nanorod-shaped boehmite, nanorod-shaped silica, or glass fibers.

In some embodiments, the material constituting the three-dimensional skeleton structure may include the nanocellulose.

In some embodiments, the nanocellulose may be obtained according to the following steps: providing a cellulose powder with a whiteness of $\geq$ 80%; mixing the cellulose powder with a modifying solution for reaction; after washing and removing impurities, adjusting the pH to neutral, and then grinding and cutting to obtain the nanocellulose.

Optionally, the cellulose powder with a whiteness of $\geq$ 80% may be available commercially, or by chemical methods (for example, acid hydrolysis, alkali treatment, and Tempo-catalyzed oxidation), biological methods (for example, enzymatic treatment), and mechanical methods (for example, ultra-fine grinding, ultrasonic disruption, and high-pressure homogenization). Fiber raw materials used to prepare the cellulose powder with a whiteness of $\geq$80% may include at least one of plant fibers, such as cotton fibers (for example, Gossypium fibers and kapok fibers), bast fibers (for example, sisal fibers, ramie fibers, jute fibers, flax fibers, hemp fibers, and abaca fibers), brown fibers, wood fibers, bamboo fibers, and grass fibers.

In some embodiments, the cellulose powder with a whiteness of $\geq$ 80% may also be prepared by the following method: letting the fiber raw material become loose to remove impurities; afterwards, cooking it with an alkaline solution (for example, an aqueous NaOH solution which may have a concentration of from 4 wt% to 20 wt%, and optionally from 5 wt% to 15 wt%); and then sequentially conducting water-washing to remove impurities (for example, for 3 to 6 times), bleaching (for example, using sodium hypochlorite and/or hydrogen peroxide), acid-washing to remove impurities, water washing to remove impurities, dewatering, and airflow drying, to obtain cellulose powder.

In some embodiments, the modifying solution may be an acid solution (for example, an aqueous sulfuric acid solution, an aqueous boric acid solution, an aqueous phosphoric acid solution, and an aqueous acetic acid solution) or an alkali solution (for example, a solution of urea in an organic solvent). Optionally, the modifying solution is an acid solution.

Optionally, the concentration of the acid solution may be from 5 wt% to 80 wt%. When the modifying solution is an aqueous sulfuric acid solution, the concentration of the acid solution may be from 40 wt% to 80 wt%, thereby obtaining a cellulose powder with sulfonic acid groups. When the modifying solution is an aqueous boric acid solution, the concentration of the acid solution may be from 5 wt% to 10 wt%, thereby obtaining a cellulose powder with boric acid groups. When the modifying solution is an aqueous phosphoric acid solution, the concentration of the acid solution may be from 45 wt% to 75 wt%, thereby obtaining a cellulose powder with phosphoric acid groups. When the modifying solution is an aqueous acetic acid solution, the concentration of the acid solution may be from 40 wt% to 80 wt%, thereby obtaining a cellulose powder with carboxylic acid groups.

Optionally, the solution of urea in an organic solvent may be a solution of urea in dimethylbenzene, thereby obtaining a cellulose powder with amino groups.

In some embodiments, mass ratio of the cellulose powder to the modifying solution may be from 1:2.5 to 1:50, and optionally from 1:5 to 1:30.

When the modifying solution is an aqueous sulfuric acid solution, the mass ratio of cellulose powder to acid solution may be from 1:5 to 1:30. When the modifying solution is an aqueous boric acid solution, the mass ratio of cellulose powder to acid solution may be from 1:20 to 1:50. When the modifying solution is an aqueous phosphoric acid solution, the mass ratio of cellulose powder to acid solution may be from 1:5 to 1:30. When the modifying solution is an aqueous acetic acid solution, the mass ratio of cellulose powder to acid solution may be from 1:5 to 1:30. When the modifying solution is a urea solution in organic solvent, the mass ratio of cellulose powder to urea solution in organic solvent may be from 1:4 to 1:40.

In some embodiments, when the modifying solution is an acid solution, the reaction may be carried out at a temperature not exceeding 80°C, optionally at a temperature of from 30°C to 60°C, and the reaction of cellulose powder with the modifying solution may be carried out for from 0.2 h to 2.5 h, and optionally from 0.5 h to 1.5 h.

In some embodiments, when the modifying solution is an alkaline solution, the reaction may be carried out at a temperature of from 100°C to 145°C, and the reaction of the cellulose powder with the modification solution may be carried out for from 0.5 h to 3.5 h.

In some embodiments, grinding may be performed using a grinder, and cutting may be performed using a high-pressure homogenizer. By adjusting the grinding parameters (such as the number of grinding cycles, and grinding time) of the grinder and the cutting parameters of the high-pressure homogenizer, the nanocellulose with different average diameters and/or different average lengths can be obtained.

In some embodiments, a coating machine may be used for applying the coating slurry. In the present application, the model of the coating machine is not specifically restricted, for example, a commercially available coating machine may be used. The coating machine includes an intaglio roller, which is used for transferring the slurry onto the porous substrate.

In some embodiments, the coating method of the applying slurry may be a transfer coating, a rotary spraying, a dip coating, etc.

In some embodiments, the method may further include the following step: applying the slurry containing the granular binder onto at least part of the surface of the coating, followed by drying, to give a binder layer.

The method for preparing the separator provides the coating via a one-time applying, which greatly simplifying the preparation of the separator.

The raw materials and their parameters such as their amounts used in the method for preparing the separator of the present application can be determined with reference to the separator of embodiments according to the first aspect of the present application, and thus will not be repeated here.

Unless otherwise specified, all raw materials used in the method for preparing the separator of the present application may be commercially available.

## Secondary Battery

In a third aspect, the present application provides a secondary battery.

Secondary batteries, also known as rechargeable batteries or storage batteries, refer to batteries that can be used continuously by activating active materials through charging after the battery is discharged. Normally, a secondary battery includes an electrode assembly and an electrolytic solution, in which the electrode assembly includes a positive electrode plate, a negative electrode plate and a separator, and in which the separator, being disposed between a positive electrode plate and a negative electrode plate, is mainly used to prevent short circuit between the positive electrode and the negative electrode and also allows active ions to pass through.

In the present application, the types of the secondary battery are not particularly restricted. For example, the secondary battery may be a lithium-ion battery, a sodium-ion battery, a lithium-metal battery, a sodium-metal battery and the like. In particular, the secondary battery may be a lithium-ion secondary battery.

The secondary battery of embodiments according to the third aspect of the present application includes the separator of embodiments according to the first aspect of the present application or the separator is prepared by the method of embodiments according to the second aspect of the present application, in which the separator is disposed between the positive electrode plate and the negative electrode plate. Optionally, the coating of the present application is present on at least one side of the separator and the side is close to the negative electrode plate. As a result, the secondary battery of the present application can have high thermal stability and also have long service life and good dynamic performance.

[Positive Electrode Plate]

In some embodiments, the positive electrode plate includes a positive electrode current collector and a positive electrode film layer which is disposed on one surface or both surfaces of the positive electrode current collector and includes a positive electrode active material. For example, the positive current collector has two opposite surfaces along the thickness direction of the positive current collector, and the positive electrode film layer is disposed on any one or both of the two opposite surfaces of the positive current collector.

When the secondary battery of the present application is a lithium-ion battery, the positive electrode active material may include, but is not limited to, at least one of lithium transition metal oxides, lithium-containing phosphates, or the modified compounds thereof. Examples of lithium transition metal oxides may include, but are not limited to, at least one of lithium cobalt oxide lithium nickel oxide lithium manganese oxide lithium nickel cobalt oxide lithium manganese cobalt oxide, lithium nickel manganese oxide, lithium nickel cobalt manganese oxide, lithium nickel cobalt aluminum oxide, or the modified compounds thereof. Examples of lithium-containing phosphates may include, but are not limited to, at least one of lithium iron phosphate, composite of lithium iron phosphate with carbon, lithium manganese phosphate, composite of lithium manganese phosphate with carbon, lithium manganese iron phosphate, composite of lithium manganese iron phosphate with carbon, and the modified compounds thereof.

In some embodiments, in order to further increase the energy density of the secondary battery, the positive electrode active material for the lithium-ion battery may include one or more of lithium transition metal oxides having a general formula of $Li_aNi_bCo_cM_dO_eA_f$ and modified compounds thereof. In the formula, $0.8 \leq a \leq 1.2$, $0.5 \leq b < 1$, $0 < c < 1$, $0 < d < 1$, $1 \leq e \leq 2$, and $0 \leq f \leq 1$; M is one or more selected from Mn, Al, Zr, Zn, Cu, Cr, Mg, Fe, V, Ti and B; and A is one or more selected from N, F, S and Cl.

As an example, positive electrode active materials for lithium-ion batteries may include one or more of $LiCoO_2$, $LiNiO_2$, $LiMnO_2$, $LiMn_2O_4$, $LiNi_{1/3}Co_{1/3}Mn_{1/3}O_2$ (NCM333), $LiNi_{0.5}Co_{0.2}Mn_{0.3}O_2$ (NCM523), $LiNi_{0.6}Co_{0.2}Mn_{0.2}O_2$ (NCM622), $LiNi_{0.8}Co_{0.1}Mn_{0.1}O_2$ (NCM811), $LiNi_{0.85}Co_{0.15}Al_{0.05}O_2$, $LiFePO_4$ and $LiMnPO_4$.

When the secondary battery of the present application is a sodium-ion battery, the positive electrode active material may include, but is not limited to at least one of sodium-containing transition metal oxides, polyanion materials (such as phosphate, fluorophosphate, pyrophosphate and sulfate), or Prussian blue materials.

As an example, positive electrode active materials for sodium-ion batteries may include at least one of $NaFeO_2$, $NaCoO_2$, $NaCrO_2$, $NaMnO_2$, $NaNiO_2$, $NaNi_{1/2}Ti_{1/2}O_2$, $NaNi_{1/2}Mn_{1/2}O_2$, $Na_{2/3}Fe_{1/3}Mn_{2/3}O_2$, $NaNi_{1/3}Co_{1/3}Mn_{1/3}O_2$, $NaFePO_4$, $NaMnPO_4$, $NaCoPO_4$, Prussian blue materials, or the materials having a general formula of $X_pM'_q(PO4)_rO_xY_{3-x}$. In general formula $X_pM'_q(PO4)_rO_xY_{3-x}$, $0 < p \leq 4$, $0 < q \leq 2$, $1 \leq r \leq 3$, $0 \leq x \leq 2$, X is one or more selected from $H^+$, $Li^+$, $Na^+$, $K^+$ and $NH^{4+}$, M' is a transition metal cation and optionally is at least one of V, Ti, Mn, Fe, Co, Ni, Cu or Zn, and Y is a halogen anion and optionally is at least one of F, Cl or Br.

In the present application, the modified compounds of the above positive electrode active materials may be doping-modified and/or surface-coating-modified compounds of the positive electrode active materials.

In some embodiments, the positive electrode film layer may further optionally include a conductive agent for the positive electrode. In the present application, the type of conductive agent for positive electrode is not particularly restricted, and as an example, the conductive agent for positive electrode includes at least one of superconducting carbon, conductive graphite, acetylene black, carbon black, Ketjen black, carbon dots, carbon nanotubes, graphene, or carbon nanofibers.

In some embodiments, the positive electrode film layer may further optionally include a binder for the positive electrode. In the present application, the type of the binder for the positive electrode is not particularly restricted, and as an example, the binder for the positive electrode may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorinated acrylate resins.

In some embodiments, the positive electrode current collector may be a metal foil or a composite current collector. For example, the metal foil may be an aluminum foil. The composite current collector may include a base layer of polymeric material and a layer of metallic material formed on at least one surface of the base layer of polymeric material. As an example, the metal material may include at least one of aluminum, aluminum alloy, nickel, nickel alloy, titanium, titanium alloy, silver, or silver alloy. As an example, the base layer of polymeric material may include at least one of polypropylene (PP), polyethylene terephthalate (PET), polybutylene terephthalate (PBT), polystyrene (PS), or polyethylene (PE).

The positive electrode film layer is usually formed by applying a positive electrode slurry on a positive electrode current collector followed by drying and cold-pressing. The positive electrode slurry is usually formed by dispersing a positive electrode active material, an optional conductive agent, an optional binder and any other components in a solvent and stirring them uniformly. The solvent may be N-methylpyrrolidone (NMP), but is not limited thereto.

[Negative Electrode Plate]

In some embodiments, the negative electrode plate includes a negative electrode current collector and a negative electrode film layer which is disposed on at least one surfaces of the negative electrode current collector and includes a negative electrode active material. For example the negative current collector has two opposite surfaces alone the thickness direction of the negative current collector, and the negative electrode film layer is disposed on any one or both of the two opposite surfaces of the negative current collector.

The negative electrode active material may be a negative electrode active material well-known in the art for secondary batteries. As an example, the negative electrode active material may include, but is not limited to at least one of natural graphite, artificial graphite, soft carbon, hard carbon, silicon-based material, tin-based material, or lithium titanate. The silicon-based material may include at least one of elemental silicon, silicon oxide, silicon-carbon composite, silicon-nitrogen composite, or silicon alloy. The tin-based material may include at least one of elemental tin, tin oxide, or tin alloy materials.

In some embodiments, the negative electrode film layer may further optionally include a conductive agent for the negative electrode. In the present application, the type of the conductive agent for negative electrode is not particularly restricted, and as an example, the conductive agent for negative electrode may include at least one of superconducting carbon, conductive graphite, acetylene black, carbon black, Ketjen black, carbon dots, carbon nanotubes, graphene, or carbon nanofibers.

In some embodiments, the negative electrode film layer may further optionally include a binder for the negative electrode. In the present application, the type of the binder for the negative electrode is not particularly restricted, and as an example, the binder for the negative electrode may include at least one of styrene-butadiene rubber (SBR), water-soluble unsaturated resin SR-1B, aqueous acrylics resin (for example, polyacrylic acid PAA, polymethacrylic acid PMAA, sodium polyacrylate PAAS), polyacrylamide (PAM), polyvinyl alcohol (PVA), sodium alginate (SA), or carboxymethyl chitosan (CMCS).

In some embodiments, the negative electrode film layer may further optionally include other auxiliary agents. As examples, other auxiliary agents may include thickeners, for example, sodium carboxymethylcellulose (CMC), and PTC thermistor material.

In some embodiments, the negative electrode collector may be a metal foil or a composite collector. For example, the metal foil may be a copper foil. The composite current collector may include a base layer of polymeric material and a layer of metallic material formed on at least one surfaces of the base layer of polymeric material. As an example, the metal material may include at least one of copper, copper alloy, nickel, nickel alloy, titanium, titanium alloy, silver, or silver alloy. As an example the base layer of polymeric material may include at least one of polypropylene (PP), polyethylene terephthalate (PET), polybutylene terephthalate (PBT), polystyrene (PS), or polyethylene (PE).

The negative electrode film layer is usually formed by applying a negative electrode slurry to a negative electrode collector, followed by drying and cold-pressing. The negative electrode slurry is typically formed by dispersing the negative active material, an optional conductive agent, an optional binder, other optional auxiliary agents in a solvent and stirring them uniformly. The solvent may be N-methylpyrrolidone (NMP) or deionized water, but is not limited thereto.

The negative electrode plate does not exclude additional functional layers other than the negative electrode film layer. For example, in some embodiments, the negative electrode plate described in the present application further includes a conductive primer layer (such as composed of a conductive agent and a binder) sandwiched between the negative electrode current collector and the negative electrode film layer, and disposed on the surface of the negative electrode current collector. In some embodiments, the negative electrode plate described in the present application further includes a protective layer covering the surface of the negative electrode film layer.

**EP 4 618 292 A1**

[Electrolytic Solution]

During the charging and discharging of the battery, active ions are intercalated and deintercalated repeatedly between the positive electrode plate and the negative electrode plate, and the electrolytic solution conducts active ions between the positive electrode plate and the negative electrode plate. In the present application, the type of the electrolytic solution is not particularly restricted and can be selected according to actual needs.

The electrolytic solution includes an electrolyte salt and a solvent. In the present application, the types of solvent and the electrolyte salt are not particularly restricted, and can be selected according to actual needs.

When the secondary battery of the present application is a lithium-ion battery, as an example, the electrolyte salt may include at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium difluorosulfimide (LiFSI), lithium bistrifluoromethanesulfonimide (LiTFSI), lithium trifluoromethanesulfonate (LiTFS), lithium difluoro(oxalate)borate (LiDFOB), bis(oxalate)borate (Li-BOB), lithium difluorophosphate ($LiPO_2F_2$), lithium difluorobisoxalate phosphate (LiDFOP), or lithium tetrafluorooxalate phosphate (LiTFOP).

When the secondary battery of the present application is a sodium-ion battery, as an example, the electrolyte salt may include, but is not limited to, at least one of sodium hexafluorophosphate ($NaPF_6$), sodium tetrafluoroborate ($NaBF_4$), sodium perchlorate ($NaClO_4$), sodium hexafluoroarsenate ($NaAsF_6$), sodium bisfluorosulfonimide (NaFSI), sodium bistrifluoromethanesulfonimide (NaTFSI), sodium trifluoromethanesulfonate (NaTFS), sodium difluoro(oxalate)borate (NaDFOB), sodium bis(oxalate)borate (NaBOB), sodium difluorophosphate ($NaPO_2F_2$), sodium difluorobisoxalate phosphate (NaDFOP) or sodium tetrafluorooxalate phosphate (NaTFOP).

As an example, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethylsulfone (MSM), methylethylsulfone (EMS), or diethylsulfone (ESE).

In some embodiments, the electrolytic solution may optionally further include an additive. For example, the additive may comprise a negative electrode film-forming additive, a positive electrode film-forming additive, and an additive that can improve certain performance of the battery, such as the additive that can improve overcharging performance of the battery, an additive that can improve high-temperature performance of the battery, and an additive that can improve low-temperature power/rating performance of the battery.

In some embodiments, the positive electrode plate, the separator, and the negative electrode plate may be fabricated into an electrode assembly by a winding process and/or a lamination process.

In some embodiments, the secondary battery may include an outer packaging. The outer packaging may be used to encapsulate the electrode assembly and the electrolytic solution.

In some embodiments, the outer packaging of the secondary battery may be a hard housing, such as a hard plastic housing, an aluminum housing, and a steel housing. The outer packaging of the secondary battery may also be a soft pack, such as a pouch type soft pack. The material of the soft pack may be plastic, such as at least one of polypropylene (PP), polybutylene terephthalate (PBT), or polybutylene succinate (PBS).

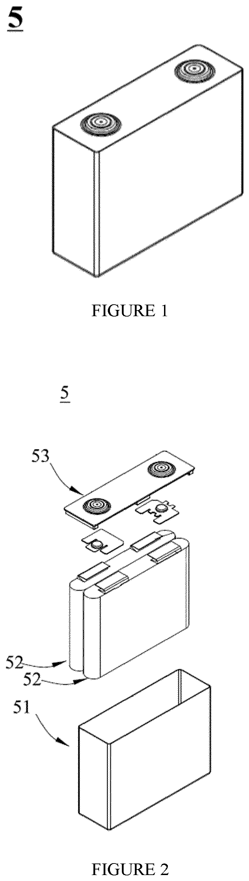

In the present application, the shapes of the secondary battery are not particularly restricted, and may be cylindrical, square, or other arbitrary shapes. Figure 1 shows a battery 5 of a square structure as an example.

In some embodiments, referring to Figure 2, the outer packaging may include a housing 51 and a cover plate 53. The housing 51 may include a bottom plate and side plates connected to the bottom plate, and the bottom plate and the side plates are combined to form an accommodating cavity. The housing 51 has an opening communicating with the accommodating cavity, and the cover plate 53 is used for covering the opening to close the accommodating cavity. The positive electrode plate, the negative electrode plate, and the separator may form an electrode assembly 52 by a winding process and/or a lamination process. The battery assembly 52 is encapsulated in the accommodating cavity. The electrolytic solution is infiltrated into the electrode assembly 52. There may be one or multiple electrode assemblies 52 in the secondary battery 5, and the number of the multiple electrode assembly 52 may be adjusted according to requirements.

The method for preparing the secondary battery of the present application is well known. In some embodiments, a positive electrode plate, a separator, a negative electrode plate, and electrolytic solution can be assembled to form a secondary battery. As an example, the positive electrode plate, the separator, and the negative electrode plate may be formed into an electrode assembly by a winding process and/or a laminating process; the electrode assembly is placed in an outer packaging and dried, followed by injection with the electrolytic solution; after the processes including vacuum encapsulation, steady standing, chemical formation, and shaping, a secondary battery is obtained.

In some embodiments, the secondary battery of the present application may be assembled into a battery module, and the number of secondary batteries contained in the battery module can be multiple, and the specific number can be

17

adjusted according to the application and capacity of the battery module.

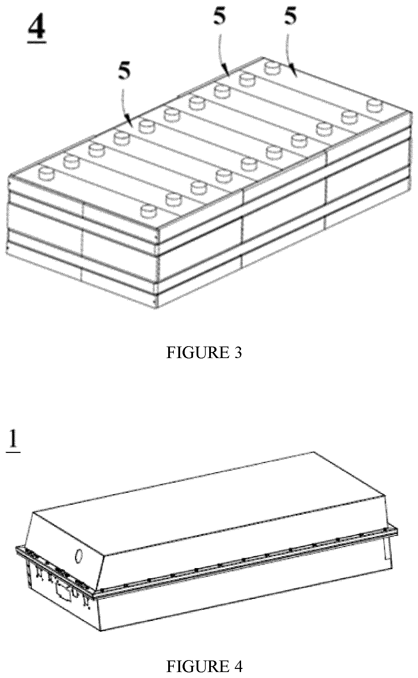

Figure 3 is a schematic diagram of battery module 4 as an example. Referring to Figure 3, in battery module 4, a plurality of secondary batteries 5 may be disposed sequentially in the length direction of battery module 4. Apparently, they may also be disposed in any other manner. Furthermore, the plurality of secondary batteries 5 may be fixed by fasteners.

Optionally, the battery module 4 may further include a housing having an accommodating space in which a plurality of secondary batteries 5 are accommodated.

In some embodiments, the above-mentioned battery module may also be assembled into a battery pack, and the number of battery modules contained in the battery pack can be adjusted according to the application and capacity of the battery pack.

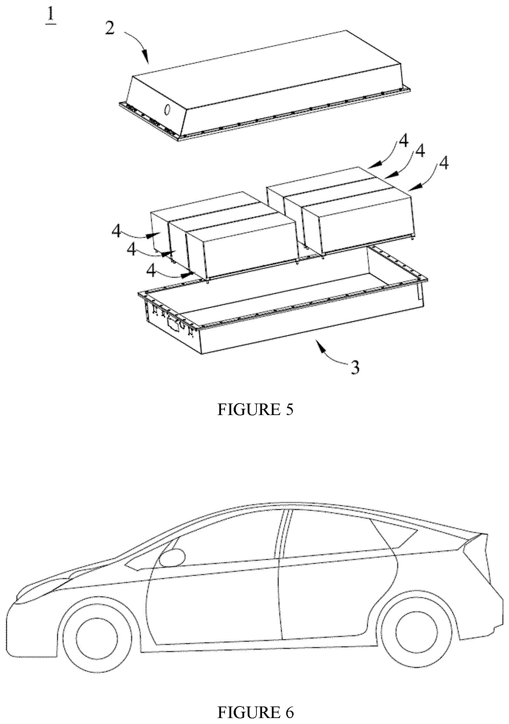

Figures 4 and 5 are schematic diagrams of battery pack 1 as an example. As shown in Figures 4 and 5, battery pack 1 may include a battery case and a plurality of the battery modules 4 disposed in the battery case. The battery case includes an upper case body 2 and a lower case body 3. The upper case body 2 is used for covering the lower case body 3 to form a closed space for receiving the battery modules 4. The plurality of battery modules 4 may be disposed in the battery case in any manner.

**Electrical Device**

In embodiments according to the fourth aspect, the present application provides an electrical device including at least one of the secondary battery, the battery module, or the battery pack of the present application. The secondary battery, the battery module or the battery pack may be used as a power source of the electrical device, and may also be used as an energy storage unit of the electrical device. The electrical device may be, but is not limited to, a mobile device (for example, a mobile phone, and a laptop computer), an electric vehicle (for example, a pure electric vehicle, a hybrid electric vehicle, a plug-in hybrid electric vehicle, an electric bicycle, an electric scooter, an electric golf vehicle, and an electric truck), an electric train, a ship, a satellite, an energy storage system, etc.

The electrical device may include the secondary battery, the battery module or the battery pack according to application requirements.

Figure 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module may be used.

As another example, the electrical device may be a mobile phone, a tablet computer, a notebook computer, etc. The electric device is generally required to be light and thin, and a secondary battery may be used as a power source.

**Examples**

The following examples are intended to describe the present application more specifically, merely for the purpose of illustration. Various modifications and variations within the scope of the present application are apparent to those skilled in the related art. Unless otherwise stated, all parts, percentages, and ratios reported in the following examples are based on mass, and all agents used in the examples are commercially available or synthesized by conventional methods and can be directly obtained without further treatment, and the instruments used in the examples are commercially available.

**Preparation of Nanocellulose**

A Gossypium linter was loosen by a cotton opener to remove slag, afterwards, it was cooked at 150 °C in a 5 wt.% NaOH aqueous solution for 2 hours, and then it was washed with water to remove impurities (3 times of water washing), bleached with sodium hypochlorite, washed with diluted hydrochloric acid to remove impurities, washed with water to remove impurities (1 time of water washing), water discharged and dried with air flow in sequence, to obtain a Gossypium cellulose powder with whiteness of $\geq$ 85%.

The obtained Gossypium cellulose powder (1 kg) was mixed with 60 wt.% sulfuric acid aqueous solution (30 kg), allowing them to react at 55°C-60°C for 0.5-0.8 h. After the reaction was completed, the reaction mixture was subjected to washing with water (3 times of water washing) to remove impurities, and filtering to remove acid and impurities. The mixture was adjusted to neutral pH with 10 wt.% aqueous NaOH solution, and then subjected to grinding with a grinder and nanoscale cutting with a high pressure homogenizer, to obtain nanocellulose with sulfonic acid modifying group with the molar ratio of the sulfonic acid to the group to hydroxyl group being from 2:3 to 7:3.

During the preparation process, nanocelluloses with different average diameters and/or lengths could be obtained by adjusting the reaction concentration, reaction time, processing parameters of the grinder, and the cutting parameters of the high-pressure homogenizer.

The molar ratio of the modifying groups to the surface hydroxyl groups in the nanocellulose could be determined by the following method: According to the phthalic anhydride method prescribed in GB/T 12008.3-2009, the hydroxyl values of the raw cellulose and nanocellulose (the milligrams of potassium hydroxide equivalent to the hydroxyl content in each sample) were tested respectively. The obtained values, expressed in mg KOH/g, were converted to mmol/g as a hydroxyl content. By subtracting the hydroxyl content of the nanocellulose from that of the raw cellulose, the content of the modifying groups (i.e., the content of the modified hydroxyl groups) could be obtained, thereby calculating the molar ratio of the modifying groups to the hydroxyl groups.

**Example 1**

Preparation of Separator

A PE porous substrate having a thickness of 4.8 $\mu$m was provided.

Preparation of coating slurry: the fillers having a porous structure (commercially available) as shown in Table 1, the nanocellulose and the aqueous solution polyacrylic acid as a binder were uniformly mixed in an appropriate amount of solvent deionized water at a mass ratio of 80:18:2 to obtain a coating slurry.

Application: The prepared coating slurry was applied to both surfaces of the PE porous substrate using a coating machine, followed by drying and cutting, to obtain the separator.

Preparation of Positive Electrode Plate

The positive electrode active material $LiNi_{0.8}Co_{0.1}Mn_{0.1}O_2$ (NCM811), the carbon black (Super P) as a conductive agent, and polyvinylidene fluoride (PVDF) as a binder were uniformly mixed in an appropriate amount of solvent N-methylpyrrolidone (NMP) at a mass ratio of 96.2:2.7:1.1 to obtain a positive electrode slurry; the positive electrode slurry was applied on an aluminum foil as the positive electrode collector, and then dried and cold-pressed, slitted, and cut, to obtain the positive electrode plate.

Preparation of Negative Electrode Plate

An artificial graphite as the negative electrode active material, a carbon black (Super P) as a conductive agent, a styrene butadiene rubber (SBR) as a binder, and a carboxymethyl cellulose sodium (CMC) were mixed in a suitable solvent deionized water at a mass ratio of 96.4:0.7:1.8:1.1 to obtain a negative electrode slurry; the negative electrode slurry was applied onto a copper foil as the negative electrode current collector; and after processes including drying, cold-pressing, slitting and cutting, the negative electrode plate was obtained.

Preparation of Electrolytic Solution

Ethylene carbonate (EC), dimethyl carbonate, and ethyl methyl carbonate (EMC) were mixed at a mass ratio of 30: 30: 40 to obtain an organic solvent, and then a fully anhydrous $LiPF_6$ was dissolved in the above organic solvent, to prepare an electrolytic solution with a concentration of 1 mol/L.

Preparation of Secondary Battery

The positive electrode plate, the separator, and the negative electrode plate were stacked and wound in sequence to obtain an electrode assembly; the electrode assembly was placed in an outer packaging and dried, followed by injecting the electrolytic solution; after the processes including vacuum encapsulation, standing, chemical formation, and shaping, a secondary battery was obtained.

**Examples 2-12**

Secondary batteries were prepared by a method similar to that of Example 1, except that fillers having the porous structure, used in the preparation of the separator, had different volume distribution particle size Dv50, different specific surfaces and/or the nanocelluloses had different average diameters and average lengths. Specific parameters were shown in Table 1.

**Examples 13-15**

Secondary batteries were prepared by a method similar to that of Example 1, except that fillers having the porous structure used in the preparation of the separator had different types, and the nanocelluloses had different average diameters and average lengths. Specific parameters were shown in Table 1.

### Examples 16-20

Secondary batteries were prepared by a method similar to that of Example 1, except that fillers having the porous structure and the nanocellulose used in the preparation of the separator had different the mass contents. Specific parameters were shown in Table 1.

### Comparative Example 1

Secondary batteries were prepared by a method similar to that of Example 6, except that a common primary particle of alumina (solid), instead of the fillers having the porous structure, were used to prepare the separator.

### Tests

(1) Test of Cycling Performance of the Secondary Battery

At 45°C, the secondary battery was charged to 4.2 V at a constant current of 1 C and was further charged to a current of ≤ 0.05 C at a constant voltage, and the secondary battery then was at a fully charged state, at which time the charging capacity, i.e. the charging capacity after the first cycle, was recorded; the secondary battery, after standing for 5 min, was discharged to 2.8 V at a constant current of 1 C, which was one cyclic charging and discharging process, and the discharging capacity then, i.e. the discharging capacity after the first cycle, was recorded. The secondary battery was subjected to the above cyclic charging and discharging process, and the discharging capacity after each cycle was recorded. Capacity retention ratio (%) of secondary battery after 1000 cycles at 45°C = discharging capacity after 1000 cycles/discharging capacity after the first cycle × 100%. For accuracy, the average value of five replicate samples was taken as the test result.

(2) Test of Low Temperature Discharging Rate of the Secondary battery

At 0°C, the secondary battery was discharged to 2.8V at a constant rate of 0.33C; after standing for 30 min, it was charged to 4.20V at the constant current of 0.33C and then was charged to a current of 0.05C at a constant voltage; after standing for 30 min, it was discharged to 2.8V at the constant rate of 0.33C; after standing for 30min, the discharging capacity A1 then was recorded. Afterwards, the secondary battery was charged to 4.20V at a constant current of 0.33C and further charged to a current of 0.05C at a constant voltage; after standing for 30 min, it was charged to 2.8V at a constant voltage of 2C; after standing for 60 min, the discharging capacity then was recorded as A2. The low temperature discharging rate of the secondary battery was denoted as the ratio of discharging capacity A2 at 0°C and at the rate of 2C to the discharging capacity A1 at 0°C and at the rate of 0.33C.

Table 1

| Nos. | Types | Filler having a porous structure | | | | Nanocellulose | | | $D_1/(d_1/\sqrt{6})$ | $d_1/(L_1\sqrt{2})$ | Capacity retention ratio after 1000 cycles at 45°C (%) | Discharging capacity retention ratio at 2C/0.33C at 0°C |
|---|---|---|---|---|---|---|---|---|---|---|---|---|
| | | Volume distribution particle size, Dv50, $d_1$ (nm) | Average pore size (nm) | Specific surface area (m²/g) | Mass content (wt%) | Average diameter, D1 (nm) | Average length, L1 (nm) | Mass content (wt%) | | | | |
| Cpmpartive Example 1 | Alumina | 500 | / | 6.0 | 80 | 20 | 1750 | 18 | 0.098 | 0.404 | 85.0% | 85.0% |
| Example 1 | ZIF-8 | 45 | 0.45 | 2960 | 80 | 20 | 1750 | 18 | 1.089 | 0.036 | 88.0% | 88.0% |
| Example 2 | ZIF-8 | 100 | 0.45 | 2693 | 80 | 20 | 1750 | 18 | 0.490 | 0.081 | 89.0% | 89.0% |
| Example 3 | ZIF-8 | 200 | 0.45 | 2350 | 80 | 20 | 1750 | 18 | 0.245 | 0.162 | 90.0% | 91.0% |
| Example 4 | ZIF-8 | 500 | 0.45 | 1992 | 80 | 20 | 1750 | 18 | 0.098 | 0.404 | 91.0% | 92.0% |
| Example 5 | ZIF-8 | 700 | 0.45 | 1829 | 80 | 20 | 1750 | 18 | 0.070 | 0.566 | 90.5% | 91.0% |
| Example 6 | ZIF-8 | 800 | 0.45 | 1558 | 80 | 20 | 1750 | 18 | 0.061 | 0.646 | 90.2% | 90.0% |
| Example 7 | ZIF-8 | 1500 | 0.45 | 1306 | 80 | 20 | 1750 | 18 | 0.033 | 1.212 | 89.5% | 89.5% |
| Example 8 | ZIF-8 | 2000 | 0.45 | 1050 | 80 | 20 | 3000 | 18 | 0.024 | 0.943 | 89.5% | 89.0% |
| Example 9 | ZIF-8 | 700 | 0.45 | 1829 | 80 | 50 | 3750 | 18 | 0.175 | 0.264 | 88.0% | 87.0% |
| Example 10 | ZIF-8 | 700 | 0.45 | 1829 | 80 | 40 | 3000 | 18 | 0.140 | 0.330 | 89.0% | 89.0% |
| Example 11 | ZIF-8 | 700 | 0.45 | 1829 | 80 | 30 | 2250 | 18 | 0.105 | 0.440 | 89.9% | 90.0% |
| Example 12 | ZIF-8 | 700 | 0.45 | 1829 | 80 | 15 | 1125 | 18 | 0.052 | 0.880 | 88.0% | 89.0% |
| Example 13 | Prussian blue | 1000 | 1.2 | 1558 | 80 | 38 | 2250 | 18 | 0.093 | 0.629 | 90.5% | 91.0% |
| Example 14 | Molecular sieve | 1000 | 0.8 | 893 | 80 | 38 | 2250 | 18 | 0.093 | 0.629 | 89.5% | 90.0% |
| Example 15 | Porous silicon dioxide | 1000 | 0.6 | 750 | 80 | 38 | 2250 | 18 | 0.093 | 0.629 | 90.5% | 88.0% |
| Example 16 | ZIF-8 | 800 | 0.45 | 1558 | 45 | 20 | 1750 | 53 | 0.061 | 0.646 | 87.5% | 88.0% |
| Example 17 | ZIF-8 | 800 | 0.45 | 1558 | 60 | 20 | 1750 | 38 | 0.061 | 0.646 | 88.0% | 90.0% |
| Example 18 | ZIF-8 | 800 | 0.45 | 1558 | 75 | 20 | 1750 | 23 | 0.061 | 0.646 | 90.0% | 91.0% |

| Nos. | Filler having a porous structure | | | | | Nanocellulose | | | $D_1/(d_1/\sqrt{6})$ | $d_1/(L_1/\sqrt{2})$ | Capacity retention ratio after 1000 cycles at 45°C (%) | Discharging capacity retention ratio at 2C/0.33C at 0°C |
|---|---|---|---|---|---|---|---|---|---|---|---|---|
| | Types | Volume distribution particle size, Dv50, $d_1$ (nm) | Average pore size (nm) | Specific surface area $(m^2/g)$ | Mass content (wt%) | Average diameter, D1 (nm) | Average length, L1 (nm) | Mass content (wt%) | | | | |
| Example 19 | ZIF-8 | 800 | 0.45 | 1558 | 93 | 20 | 1750 | 5 | 0.061 | 0.646 | 89.5% | 90.0% |
| Example 20 | ZIF-8 | 800 | 0.45 | 1558 | 95 | 20 | 1750 | 3 | 0.061 | 0.646 | 88.5% | 88.0% |

As can be seen from Table 1, by disposing the coating including the three-dimensional skeleton structure and the fillers having the porous structure on the surface of porous substrate of the separator and by filling at least part of the fillers having the porous structure into the three-dimensional skeleton structure, the secondary battery could have high thermal stability, and also could have long cycle life and good dynamic performance.

In addition, as can be seen from the test results shown in Table 1, by further adjusting the parameters of the nanocellulose and the fillers having the porous structure to satisfy $0 < D_1/(d_1/\sqrt{6}) \leq 1$ and $0 < d_1/(L_1/\sqrt{2}) \leq 1$, the cycling performance and the dynamic performance of the secondary battery could be further improved. On this basis, when further adjusting the range of one or more of $D_1/(d_1/\sqrt{6})$, $d_1/(L_1/\sqrt{2})$, $D_1$, $d_1$, and $L_1$, the cycling performance and the dynamic performance of the secondary battery could be further improved.

Still, as can be seen from test results shown in Table 1, by further adjusting the mass contents of the nanocellulose and the fillers having the porous structure, the cycling performance and the dynamic performance of the secondary battery could be further improved.

It should be noted that the present application is not limited to the above implementations. The above implementations are only examples, and all implementations having compositions and effects substantially identical to the technical concept of the present application are included in the scope of the present application. In addition, without deviating from the gist of the present application, various variations applied to the implementations that could be conceived by those skilled in the art and other modes constructed by combining some elements of the implementations are also included in the scope of the present application.

**Claims**

1. A separator comprising a porous substrate and a coating disposed on at least one surface of the porous substrate, wherein the coating comprises a three-dimensional skeleton structure and fillers having a porous structure, and at least part of the fillers having the porous structure are filled into the three-dimensional skeleton structure.

2. The separator according to claim 1, wherein the separator satisfies $0 < D_1/(d_1/\sqrt{6}) \leq 1$ and

$$0 < d_1/(L_1/\sqrt{2}) \leq 1,$$ wherein

   a volume distribution particle size Dv50 of the fillers having the porous structure is denoted as $d_1$, in units of nm, an average diameter of a material constituting the three-dimensional skeleton structure is denoted as $D_1$, in units of nm, and an average length of the material constituting the three-dimensional skeleton structure is denoted as $L_1$, in units of nm.

3. The separator according to claim 1 or 2, wherein

$$0.02 \leq D_1/(d_1/\sqrt{6}) \leq 0.85,$$

   and optionally $0.05 \leq D_1/(d_1/\sqrt{6}) \leq 0.65$; and/or

$$0.04 \leq d_1/(L_1/\sqrt{2}) \leq 0.8,$$

   and optionally $0.10 \leq d_1/(L_1/\sqrt{2}) \leq 0.7$.

4. The separator according to any one of claims 1-3, wherein

   the fillers having the porous structure have a volume distribution particle size Dv50 denoted as $d_1$, with $d_1$ being from 200 nm to 1500 nm, and optionally from 500 nm to 1200 nm; and/or
   the material constituting the three-dimensional skeleton structure has an average diameter denoted as $D_1$, with $D_1$ being equal to or less than 40 nm, and optionally from 5 nm to 35 nm; and/or

the material constituting the three-dimensional skeleton structure has an average length denoted as $L_1$, with $L_1$ being from 300 nm to 3000 nm, and optionally from 400 nm to 2500 nm.

5. The separator according to any one of claims 1-4, wherein the fillers having the porous structure satisfy at least one of the following conditions of (1) to (4):

(1) the fillers having the porous structure have an average pore size of from 0.1 nm to 1.5 nm, and optionally from 0.3 nm to 1.0 nm;
(2) the fillers having the porous structure have a true density of from $1.0 g/cm^3$ to $2.0 g/cm^3$, and optionally from $1.2 g/cm^3$ to $1.7 g/cm^3$;
(3) the fillers having the porous structure have a powder compaction density at 30000N of from $0.3 g/cm^3$ to $1.5 g/cm^3$, and optionally from $0.5 g/cm^3$ to $1.0 g/cm^3$; or
(4) the fillers having the porous structure have a specific surface area of from $700 m^2/g$ to $3000 m^2/g$, and optionally from $800 m^2/g$ to $2500 m^2/g$.

6. The separator according to any one of claims 1-5, wherein the fillers having the porous structure comprise at least one of inorganic porous particles or organic porous particles;

optionally, the inorganic porous particles comprise at least one of porous aluminum oxide, porous silicon dioxide, porous zirconium dioxide, porous titanium dioxide, porous zinc oxide, porous magnesium oxide, porous calcium carbonate, molecular sieve, zeolite, or the respective modified materials thereof; and
optionally, the organic porous particles comprise at least one of porous polymer materials, covalent organic framework materials, metal organic framework materials, or the respective modified materials thereof.

7. The separator according to any one of claims 1-6, wherein

the fillers having the porous structure are present in an amount of from 50 wt% to 97 wt%, and optionally from 63 wt% to 93 wt%, based on a total weight of the coating; and/or,
the three-dimensional skeleton structure is present in an amount of from 1 wt% to 48 wt%, and optionally from 5 wt% to 35 wt%, based on the total weight of the coating.

8. The separator according to any one of claims 1-7, wherein the material constituting the three-dimensional skeleton structure comprises at least one of filaments, rods, tubes, or bars.

9. The separator according to any one of claims 1-8, wherein the material constituting the three-dimensional skeleton structure has an aspect ratio of from 5 to 150, and optionally from 30 to 95.

10. The separator according to any one of claims 1-9, wherein the material constituting the three-dimensional skeleton structure comprises at least one of organic materials or inorganic materials;

optionally, the organic materials comprise at least one of nanocellulose, polytetrafluoroethylene nanofiber, or polyamide nanofibers; and optionally, the nanocellulose comprises at least one of cellulose nanofibers, cellulose nanowhisker, or bacterial nanocellulose; and
optionally, the inorganic materials comprise at least one of halloysite nanotube, nanorod-shaped alumina, nanorod-shaped boehmite, nanorod-shaped silica, or glass fibers.

11. The separator according to any one of claims 1-10, wherein the material constituting the three-dimensional skeleton structure comprises nanocellulose, and the nanocellulose comprises at least one of unmodified nanocellulose or modified nanocellulose;

optionally, the modified nanocellulose comprises a modifying group comprising at least one of an amino group, a carboxyl group, an aldehyde group, a sulfonic acid group, a boric acid group, or a phosphoric acid group, and more optionally comprising at least one of a sulfonic acid group, a boric acid group, or a phosphate group; and
optionally, the modified nanocellulose comprises a hydroxyl group and a modifying group, and a molar ratio of the modifying group to the hydroxyl group is from 1:4 to 4:1, and more optionally from 2:3 to 7:3.

12. The separator according to any one of claims 1-11, wherein the material constituting the three-dimensional skeleton structure comprises a sulfonic acid group, and the material constituting the three-dimensional skeleton structure has a sulfur element content of $\geq 0.1$ wt%, and optionally from 0.2 wt% to 0.5 wt%, based on a total weight of the material constituting the three-dimensional skeleton structure.

13. The separator according to any one of claims 1-12, wherein

the coating further comprises a non-granular binder;
optionally, the non-granular binder comprises an aqueous solution binder; and
optionally, the non-granular binder in the coating is present in an amount of $\leq 4$wt%, based on a total weight of the coating.

14. The separator according to any one of claims 1-13, wherein

the porous substrate has a thickness of $\leq 6$ $\mu$m, and optionally from 3 $\mu$m to 5 $\mu$m; and/or,
the coating has a thickness of $\leq 1.5$ $\mu$m, and optionally from 0.5 $\mu$m to 1.2 $\mu$m.

15. The separator according to any one of claims 1-14, wherein the separator further comprises a binder layer disposed on at least part of the surface of the coating;

optionally, the binder layer comprises a granular binder; and
optionally, the granular binder comprises at least one of homopolymers or copolymers of acrylate monomer, homopolymers or copolymers of acrylic monomer, or homopolymers or copolymers of fluorinated olefin monomer.

16. The separator according to any one of claims 1-15, wherein the separator satisfies at least one of the following conditions of (1) to (7):

(1) the separator has a longitudinal thermal shrinkage rate of $\leq 4$%, and optionally from 0.5% to 3.8%, at 135°C for 1 hour;
(2) the separator has a transverse thermal shrinkage rate of $\leq 4$%, and optionally from 0.5% to 3.8%, at 135°C for 1 hour;
(3) the separator has a longitudinal tensile strength of $\geq 1600$ kg/cm$^2$, and optionally from 1800 kg/cm$^2$ to 4500 kg/cm$^2$;
(4) the separator has a transverse tensile strength of $\geq 1600$ kg/cm$^2$, and optionally from 1800 kg/cm$^2$ to 4500 kg/cm$^2$;
(5) the separator has an infiltration length of $\geq 20$ mm, and optionally from 30 mm to 80 mm;
(6) the separator has an infiltration speed of $\geq 3$ mm/s, and optionally from 3 mm/s to 10 mm/s; or
(7) the separator has an air permeability of $\leq 350$ s/100mL, and optionally from 120 s/100mL to 260 s/100mL.

17. A method for preparing the separator according to any one of claims 1-16, comprising the steps of:

providing a porous substrate;
mixing a material constituting the three-dimensional skeleton structure with fillers having a porous structure in a solvent at a predetermined ratio to prepare a coating slurry;
applying the coating slurry onto at least one surface of the porous substrate followed by drying to obtain the separator,
wherein the separator comprises the porous substrate and the coating disposed on at least one surface of the porous substrate, and wherein the coating comprises the three-dimensional skeleton structure and the fillers having the porous structure, and at least part of the fillers having the porous structure are filled into the three-dimensional skeleton structure.

18. A secondary battery comprising the separator according to any one of claims 1-16 or the separator prepared by the method according to claim 17.

19. An electrical device comprising the secondary battery according to claim 18.

**5**

FIGURE 1

5

FIGURE 2

FIGURE 3

FIGURE 4

FIGURE 5

FIGURE 6

## INTERNATIONAL SEARCH REPORT

| International application No. |
| --- |
| **PCT/CN2023/077479** |

| A. | CLASSIFICATION OF SUBJECT MATTER |
| --- | --- |

H01M50/451(2021.01)i; H01M50/491(2021.01)i; H01M50/403(2021.01)i

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 电池, 隔膜, 隔离膜, 多孔, 骨架, 三维, 填料, 无机粒子, battery, separator, porous, framework, three dimensional, filler, inorganic particle

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 115668624 A (LG CHEMICAL LTD.) 31 January 2023 (2023-01-31) description, paragraphs 3 and 52-139 | 1-19 |
| Y | CN 108336279 A (WUHAN ZHONGXING INNOVATION MATERIAL TECHNOLOGY CO., LTD.) 27 July 2018 (2018-07-27) description, paragraphs 4-43 | 1-19 |
| Y | CN 115149214 A (ZHEJIANG LIWEI ELECTRONIC TECHNOLOGY CO., LTD.) 04 October 2022 (2022-10-04) description, paragraphs 2 and 6-41, and figures 1-2 | 1-19 |
| A | JP 2014040580 A (SUMITOMO CHEMICAL CO., LTD.) 06 March 2014 (2014-03-06) entire document | 1-19 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 November 2023** | **07 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/077479**

| Patent document cited in search report | | | Publication date (day/month/year) | Patent family member(s) | | | Publication date (day/month/year) |
|---|---|---|---|---|---|---|---|
| CN | 115668624 | A | 31 January 2023 | JP | 2023529704 | A | 11 July 2023 |
| | | | | KR | 20220107983 | A | 02 August 2022 |
| | | | | EP | 4184698 | A2 | 24 May 2023 |
| | | | | WO | 2022158950 | A2 | 28 July 2022 |
| CN | 108336279 | A | 27 July 2018 | None | | | |
| CN | 115149214 | A | 04 October 2022 | None | | | |
| JP | 2014040580 | A | 06 March 2014 | JP | 6242618 | B2 | 06 December 2017 |

Form PCT/ISA/210 (patent family annex) (July 2022)